# EUROPÄISCHE PATENTSCHRIFT

(11) **EP 2 931 467 B1**
(45) Veröffentlichungstag und Bekanntmachung des Hinweises auf die Patenterteilung: **14.06.2017**
(21) Anmeldenummer: 13792624.2
(22) Anmeldetag: 08.11.2013
(51) Int. Cl.: B23K 26/00, B23K 26/06, B28D 5/00, B23K 26/08, B23K 26/38, B23K 26/40, C03B 33/02

(54) **VERFAHREN ZUR HERSTELLUNG VON LINIENFÖRMIG AUFGEREIHTEN SCHÄDIGUNGSSTELLEN DURCH ULTRAKURZ FOKUSSIERTER GEPULSTER LASERSTRAHLUNG ; VERFAHREN UND VORRICHTUNG ZUM TRENNEN EINES WERKSTÜCKES MITTELS ULTRAKURZ FOKUSSIERTER LASERSTRAHLUNG UNTER VERWENDUNG EINER SCHUTZGASATMOSPHÄRE**
METHOD FOR PRODUCING ALIGNED LINEAR BREAKING POINTS BY ULTRA-SHORT FOCUSSED, PULSED LASER RADIATION; METHOD AND DEVICE FOR SEPARATING A WORKPIECE BY MEANS OF ULTRA-SHORT FOCUSSED LASER RADIATION USING A PROTECTIVE GAS ATMOSPHERE
MÉTHODE DE PRODUCTION DE POINTS DE RUPTURE EN LIGNE PAR UNE RADIATION D'UN LASER FOCALISÉ ET PULSÉ TRÈS COURT ; MÉTHODE ET DISPOSITIF DE SÉPARATION D'UNE PIÈCE AU MOYEN D'UN LASER PULSÉ ULTRA COURT UTILISANT UN GAZ DE PROTECTION

(30) Priorität: 14.11.2012 DE 102012110971; 14.11.2012 US 201261726065 P
(43) Veröffentlichungstag der Anmeldung: 21.10.2015
(73) Patentinhaber: Schott AG, 55122 Mainz (DE)
(72) Erfinder: ORTNER, Andreas, 55435 Gau-Algesheim (DE); HABECK, Andreas, 55278 Undenheim (DE); GERSTNER, Klaus, 65474 Bischofsheim (DE); HASELHORST, Georg, 61389 Schmitten (DE); WAGNER, Fabian, 55118 Mainz (DE)
(74) Vertreter: Blumbach Zinngrebe
(86) Internationale Anmeldenummer: PCT/EP2013/073329
(87) Internationale Veröffentlichungsnummer: WO 2014/075995

(56) Entgegenhaltungen:
- WO-A2-2012/006736
- WO-A2-2012/057823
- JP-A- 2000 263 277
- JP-A- 2009 023 194
- KR-A- 20120 058 276
- US-A1- 2010 025 387
- US-A1- 2010 248 451
- US-A1- 2012 111 310

## Beschreibung

Die vorliegende Erfindung betrifft ein Verfahren zur Herstellung von linienförmig aufgereihten Schädigungsstellen in einem Werkstück, ein Verfahren und eine Vorrichtung zum Trennen eines Werkstückes mittels fokussierter Laserbestrahlung gemäß dem Oberbegriff der Ansprüche 1, 10 und 12 (siehe WO2012/006736 A2). Als Werkstückmaterial kommt insbesondere vorgespanntes Glas oder Glaskeramik in Betracht.

Aus WO 2012/006736 A2 ist bekannt, dass man mit dem Kerr-Effekt die Bildung von Filamenten in Glas als irreversible Schädigungen verursachen kann. Die Aneinanderreihung solcher Schädigungen in Glas ermöglicht das Trennen von transparenten Substraten. Ein Filament entsteht durch einen ultrakurzen Laserpuls. Dabei erlebt der Laserstrahl im Inneren des Glases infolge des Kerr Effektes eine Selbstfokussierung, bis die Energiedichte in einem Punkt so hoch wird, dass ein Plasma gezündet wird. Es kommt zu einer Plasmaexplosion, bei der das Glas irreversible Schäden rund um diese Plasmaentstehungsstelle erleidet. Von dort geht weitere Strahlung aus, die der Selbstfokussierung unterliegt und die in einer Plasmaexplosion endet. Dieser Effekt wiederholt sich je nach Intensität mehrfach. Die Energie nimmt über die gesamte Glasdicke ab, so haben die ersten Plasmaspots die größte Energie und erzeugen auch die größten Schädigungen. Des Weiteren sind die Plasmaspots rund ausgeprägt, was dazu führt, dass ausgehende Defekte in alle Richtungen statistisch verteilt auftreten.

Bei Glas, welches eingeprägte Spannungen hat, zum Beispiel bei chemisch vorgespanntem Glas, kann es zum spontanen Selbstbruch kommen. Dies beeinflusst gerade die Bearbeitung von größeren Glasplatten erheblich. Durch den Bruch kommt es zur Änderung der Position der Glasplatte. Eine weitere exakte Bearbeitung ist nicht möglich.

Die Patentschrift DE 103 13 044 B3 beschreibt ein Verfahren zum Schneiden oder Bohren von Material. Auch hier wird der durch hochintensive ultrakurze Laserpulse auftretende nichtlineare optische Effekt ausgenutzt, um mittels der alternierenden Fokussierung und Defokussierung des Laserstrahls ein Filament zu erzeugen. Ein Filament ist demnach ein durch ein hochintensives Laserlichtbündel erzeugter Kanal kleinen Durchmessers.

Weiterhin beschreibt das Dokument DE 10 2006 042 280 A1 ein Verfahren zur Bearbeitung von transparentem Material mit einem Laser. Hiernach werden ultrakurze Laserimpulse genutzt, um sowohl eine Oberflächenrille auf dem Substrat als auch eine oder mehrere lasermodifizierte Regionen im Volumen das Materials zu erzeugen. Die letztendlich zum Trennen führende Fraktur erfolgt an der Oberflächenritzstruktur und pflanzt sich abwärts durch das Substratmaterial fort. Bei einer zu flachen Oberflächenrille neigt die Fraktur zur Wanderung. Das Erzeugen von Bruchkanten mit gleichbleibender, hoher Qualität ist nicht beschrieben.

Auch die DE 10 2007 028 042 B2 beschreibt ein Verfahren zur Laserbearbeitung transparenter Materialien, wobei eine Nutzung von gepulster Laserstrahlung im Nanosekundenbereich beschrieben ist. Hiernach gibt es einen Strahlungsstärkebereich, in dem Materialveränderungen auftreten, ohne dass es zu Plasmaleuchten kommt.

Zusammenfassend sind verschiedene Verfahren bekannt, die es ermöglichen, mittels ultrakurzer, gepulster Laserstrahlung Bereiche im Volumen eines Materials zu modifizieren und damit einen Bestandteil eines Trennverfahrens zu schaffen. Das Trennen und Brechen, das beispielsweise für das Vereinzeln von auf dieser Weise modifizierten Substraten erforderlich ist, ist dagegen bisher noch nicht ausreichend industriellen Prozessen zugänglich. Dieses Problem stellt sich insbesondere bei Substraten, umfassend vorgespannte Gläser oder Glaskeramiken, da diese aufgrund der Vorspannung zu einem unkontrollierten Brechen neigen, wenn sie mit ultrakurzer, gepulter Laserstrahlung bearbeitet werden.

Für einen industrialisierten Einsatz ist aber eine exakte Steuerung nicht nur für die Erzeugung einer Trennlinie in oder auf dem Substrat, sondern auch für das Trennen bzw. Brechen erforderlich, um Bruchkanten mit gleichbleibender, hoher Qualität zu erzeugen und die Stabilität und Sicherheit des Prozesses zu gewährleisten. Dies ist insbesondere im Falle von vorgespanntem Glas sehr schwierig, da die durch die Laserbestrahlung bewirkten Materialmodifikationen zum unkontrollierten Auftreten und Ausbreiten von Rissen führen können, so dass ein genaue Steuerung des Trennens sehr erschwert wird.

Zur Problematik wird folgendes angeführt:
1) Trennen/Bohren mittels Filamentierung: Verfahrensbedingt kommt es zu einer inhomogenen Ausbildung des Filaments: Auf der Eintrittsseite des filamenterzeugenden Laserstrahls werden aufgrund der hohen Anfangsenergiedichte vergleichsweise größere Plasmavolumina gezündet, als in den folgenden, tiefer im Werkstück liegenden Plasmapunkten, d.h. der Kanal der Beschädigungen (= die ausgebildete Filamentstruktur) im Werkstück läuft konisch zu. Die hervorgerufenen Beschädigungen (Mikrorisse) sind daher auf der Eintrittsseite des Laserstrahls deutlich stärker als auf der Austrittsseite. Gerichtete Festigkeitsuntersuchungen (Vierpunktbiegung, ...) zeigen einen signifikanten Unterschied in der Kantenfestigkeit schon bei einer Glasdicke von 0,7mm.
2) Raumgeometrie der Plasmaentstehungsstellen: Die durch Selbstfokussierung hervorgerufenen Plasmaentstehungsstellen besitzen im wesentlichen eine kugelsymmetrische Form mit kugelsymmetrischer Energieverteilung, was richtungsunabhängige statistisch verteilte Mikrorisse um das Plasmavolumen zur Folge hat. Dadurch ragen Risse auch in die spätere Bruchkante hinein und wirken sich festigkeitsmindernd aus.
3) Spontaner Bruch: Bei der Filamentierung von spannungsbeaufschlagten Sprödwerkstoffen kommt es während des Prozesses zum unkontrollierten Spontanbruch des Werkstücks, was in einer erhöhten Ausschussrate resultiert. Des Weiteren kommt es durch den Spontanbruch zu einer Lageverschiebung des Werkstücks, was das automatisierte Prozessieren erschwert oder gar verhindert.

Die Erfindung soll vor allem die Qualität der erzeugten Kanten steigern.

Die Erfindung wird in den unabhängigen Ansprüchen 1, 10 und 12 definiert. Bevorzugte Ausführungsformen und Weiterbildungen der Erfindung sind den jeweiligen Unteransprüchen zu entnehmen.

Mit der Erfindung wird der Trenn-Prozess für sprödharte Werkstoffe verbessert.
1) Multifilamentierung: Die Vorbereitung der Trennung als Spaltung des Werkstücks wird im Gegensatz zum Stand der Technik nicht nur durch die Erzeugung einer einzigen konisch zulaufenden Filamentstruktur, sondern durch eine Aneinanderreihung von mehreren Filamentstrukturen durchgeführt. Jede einzelne dieser Filamentstrukturen ist relativ schmal und erzeugt eine signifikant geringere Anzahl von Mikrorissen quer zur Richtung der Filamentstrukturen im Vergleich zum Trennprozess mit einer einzelnen durch das Werkstück hindurchgehende Filamentstruktur. Die geringere Konizität der einzelnen Filamentstrukturen (=Filament + Mikrorisse) erzeugt insgesamt eine höhere geometrische Genauigkeit des Bearbeitungskanals, gepaart mit einer höheren Randfestigkeit der Bruchkante nach Trennen des Werkstücks.
   Die Einzelfilamentstrukturen werden durch einen Pikos-/Femtosekunden-Puls erzeugt, der aufgeteilt wird und zeitlich versetzt, beginnend von der Austrittsseite des Laserstrahls, in das Werkstück eingebracht wird. Größere Schnitttiefen können durch Mehrpulsfolgen bei gleicher Laserleistung realisiert werden, unter entsprechender Herabsetzung der Schneidgeschwindigkeit.
2) Die Raumgeometrische Form des Plasmas kann durch eine Spezialoptik beeinflusst werden. Es wird eine längliche Form des Querschnitts des Laserstrahlenbündesl erzeugt, wie z.B. lanzettenförmig, elliptisch oder auch tropfenförmig. Dadurch ergibt sich eine kontrollierbare Vorzugsrichtung der durch die Plasmaexplosionen erzeugten entstehenden Schädigungen/Risse.
   Die Querschnitte des Laserstrahlenbündels sollten bei Rundungen oder Richtungswechsel mit ihrer Längserstreckung in Trennrichtung des Werkstückes nachgeführt/verändert werden.
3) Die Herstellung der Filamentierung unter Schutzatmosphäre ist vor allem ein maschinebauliches Konzept, wobei die Herstellungsanlage so ausgelegt wird, dass eine definierte Einstellung der Atmosphäre, welche das zu bearbeitende Werkstück umgibt, erreicht wird.
   Durch eine gezielt eingestellte Atmosphäre kann der spontane Bruch des Werkstücks gehemmt bzw. verhindert werden.
   Die Erfindung betrifft auch ein Verfahren zum Trennen eines Substrates mittels fokussierter Laserstrahlung, siehe Anspruch 10.

Durch eine gepulste, ultrakurze Laserstrahlung können in einem transparenten Material zwei Effekte der nichtlinearen Optik bewirkt werden. Diese betreffen zum einen den optischen Kerr-Effekt, zum anderen die Defokussierung des Laserstrahles in einem Plasmabläschen. Derartige Effekte sind bereits bekannt und sollen daher nur kurz umrissen werden.

Der Kerr-Effekt beschreibt eine Änderung der optischen Eigenschaft eines transparenten Materials (transparent im Wellenlängenbereich der Laserstrahlung), in Abhängigkeit von der angelegten oder auftretenden elektrischen Feldstärke. Mit der Laserstrahlung im transparenten Material tritt ein elektrisches Feld auf, dessen Stärke von der Lichtintensität der Laserstrahlung abhängt. Das elektrische Feld bewirkt eine Änderung der optischen Eigenschaft des bestrahlten Materials, darunter die Erhöhung der Brechzahl. Dies wiederum führt zu der Selbstfokussierung der Laserstrahlung.

Aufgrund der Selbstfokussierung und der daraus resultierenden Verkleinerung der Strahlungsquerschnittsfläche wächst die flächenbezogene Leistungsdichte, demnach die Strahlungsintensität, stark an und kann sehr hohe Werte erreichen. Hierdurch wird das elektrische Feld noch verstärkt, was zu Multiphotonen-Ionisation führt. Ionisation bedeutet Ladungstrennung bei Milekülen oder Atomen und Plasmabildung an Fokussierungspunkten. Jedenfalls entsteht in den Fokussierungspunkten eine Schädigung in dem Material des Substrates, die nachfolgend auch als Materialmodifikation bezeichnet wird und sich als Plasmabläschen manifestiert.

Im Bereich des örtlich auftretenden Plasmabläschens findet eine Defokussierung des Laserstrahls statt, an die sich wiederum die nächste Fokussierung des Laserstrahls anschließt. Es kann auf diese Weise eine Art Perlenkette in dem Material des Substrates erzeugt werden, die aus mehreren hintereinander aufgereihten Fokussierungs- und Defokussierungsbereichen besteht und die als Filamente bezeichnet werden.

Durch die Fokussierung und Defokussierung kann eine Propagation des Laserstrahls in das Material des Substrates bewirkt werden, wobei das Material in der Tiefe eine Art Perforation erfährt. Zum Bearbeiten von transparenten Material wie Glas ist dieser Effekt bekannt und wird genutzt, um beispielsweise durch Bewegen des Substrates relativ zur Laserstrahlung eine Art perforierte Linie in dem Substrat als Sollbruchstelle bzw. Trennlinie zu erzeugen.

Durch eine höhere Laserleistung kann eine entsprechend tiefere Perforation erreicht werden, die ein Trennen im Bereich der Perforation erleichtert.

Problematisch ist allerdings die Anwendung der tieferen Perforation im Zusammenhang mit vorgespanntem Glas, also einem Material, welches bereits im Ausgangszustand über eine erhöhte Eigenspannung verfügt. Aufgrund der erhöhten Eigenspannung kann es zu spontan auftretender Rissbildung und Rissausweitung in den perforierten Bereichen kommen, wie auch in der WO2012/006736 A2 beschrieben. Insbesondere bei höherer Laserleistung kann es so bereits während des Prozesses zu einem Bruch des Substrates kommen. Eine industrielle Anwendung ist daher deutlich erschwert, da der Trennprozess nicht sicher beherrscht und gesteuert werden kann.

Die Erfinder haben herausgefunden, dass die spontane Rissbildung reduziert oder sogar ganz verhindert werden kann, wenn während der Laserbestrahlung des Substrates eine bestimmte Atmosphäre am Werkstück vorherrscht. So wird die Rissbildung deutlich reduziert oder verzögert, wenn während der Laserbestrahlung eine Schutzgasatmosphäre vorherrscht, welche OH-ionenarm oder OH-ionenfrei ist.

Durch Anlegen von einer Stickstoff-Atmosphäre während der Laserbestrahlung konnte die Zeitspanne bis zum Auftreten spontaner Bruch- Risse im Bereich der Perforationsstellen ausreichend verlängert werden.

Auf diese Weise ist es möglich, den Prozess der Laserbestrahlung des Substrates zu beenden, bevor es zu spontanen Bruch-Rissen in dem Substrat und damit zum Bruch des Substrates kommt. Demnach wird das Substrat während der Aussetzung gepulster, ultrakurzer Laserstrahlung einer OHionenarmen bzw. OH-ionenfreien Atmosphäre ausgesetzt. Hierzu kann beispielsweise ein entsprechend gasdichter Raum, in dem das Substrat während der Laserbestrahlung gehaltert wird, genutzt werden.

Besonders gute Erfahrungen wurden gemacht bei einer Schutzgasatmosphäre, deren Wassergehalt bei weniger als 0,2 Vol%, bevorzugt bei weniger als 0,1 Vol% liegt.

Durch die Laserbestrahlung kann demgemäß eine in die Tiefe gehende, filamentartige Materialmodifikation ähnlich einer Perforation in einem vorbestimmten Volumen des Substrates erzeugt werden. Das vorbestimmte Volumen des Substrates betrifft den festgelegten Trennbereich, entlang dessen die Perforation erzeugt werden soll und der somit die spätere Trennstelle bzw. auf der Oberfläche des Substrates die Trennlinie bildet.

Besonders günstig können das Substrat oder der Laserstrahl relativ zueinander bewegt werden, um auf diese Weise die Perforation in der Tiefe des Substrates entlang der Trennlinie zu ermöglichen. Typischerweise kann dabei das Substrat bewegt werden, beispielsweise über eine X-Y-Achseneinstellanordnung, welche eine zweidimensionale Bewegung des Substrates bei einem gleichbleibenden Abstand zur Laserstrahlung ermöglicht. Diese Anordnung kann zusätzlich noch mit einer beweglichen Z-Achsenanordnung kombiniert werden, um den Abstand zwischen Substrat und Laserstrahl einstellen zu können.

Das Material des Substrats weist dabei eine optische Transparenz zumindest in dem Wellenlängenbereich der Laserstrahlung auf. Dabei beträgt die optische Transparenz in dem besagten Bereich wenigstens 80%/cm, bevorzugt wenigstens 85%/cm und ganz besonders bevorzugt wenigstens 90%/cm. Hierdurch kann die Laserstrahlung in das Material eindringen.

Das Substrat kann dabei Materialien umfassen, die ausgewählt sind aus der Gruppe Glas, Saphir, oder Diamant. Überraschenderweise kann die erfindungsgemäße Laserbestrahlung auch für vorgespanntes Glas, wie es beispielsweise für Displayanwendungen bekannt ist, oder auch bei Flachglas, verwendet werden. Ebenso überraschend können auch Materialien aus Glaskeramik bearbeitet werden.

Die in dem Substrat erzeugte, in die Tiefe gehende Perforation entlang eines Weges verläuft entlang der Trennlinie, an der eine Trennung des Substrates erfolgen soll. Die Trennlinie kann dabei von gerader Form sein, aber auch ungerade oder gebogen. So kann die Trennlinie beispielsweise auch sehr kleine Radien aufweisen, um etwa eine Materialtrennung ähnlich einer Bohrung zu ermöglichen.

Die Perforation kann senkrecht von der Oberfläche des Substrates aus in die Tiefe gehen. Sie kann aber auch in einem bestimmten Winkel in Bezug auf die Oberfläche erzeugt werden, um beispielsweise schräge Trennkanten an dem Substrat zu erzeugen. In diesem Fall wird der Laserstrahl nicht senkrecht, sondern in einem vorbestimmten Winkel auf die Oberfläche des Substrates gerichtet.

Entlang der perforierten Trennlinie erfolgt anschließend die Trennung des Materials. Hierzu ist es erforderlich, dass die durch die Perforation erzeugte Materialmodifikation, die einer Materialschädigung gleichkommt, einen bestimmten Umfang erreicht, um eine Trennung mit einer bestimmten Qualität der Trennkante bezüglich der Oberflächenbeschaffenheit und des abgetrennten Substrates bezüglich der Festigkeit zu ermöglichen.

Es hat sich gezeigt, dass eine gute Trennbarkeit an der Trennlinie erfolgen kann, wenn die Perforation in eine Tiefe geht, die wenigstens 40% der Materialdicke des Substrates, bevorzugt wenigstens 50% und ganz besonders bevorzugt wenigstens 55% beträgt. Dabei sollten die Filamente einen Abstand zueinander aufweisen, der in einem Bereich von etwa 200 µm bis 800 µm liegt. Ein Filament kann dabei einen Querschnitt in einem Bereich von etwa 15 µm bis 250 µm aufweisen.

Auf diese Weise kann entlang der Trennlinie eine ausreichend große Vorschädigung des Substratmaterials erzeugt werden, welche zu einer guten Trennbarkeit führt. Durch die Trennung des Materials entlang der Trennlinie werden Trennkanten ausgebildet, wobei die Qualität dieser erzeugten Trennkanten überraschend gut ist.

Die Trennkanten weisen typischerweise im Bereich der Perforation eine Struktur mit nebeneinander liegenden, parallelen Filamenten auf, und im darunter liegenden Trennkantenbereich eine eher muschelartige Bruchstruktur. Es konnten Rauhigkeitswerte der Trennkante erreicht werden, die in einem Bereich von Ra < 100 µm liegen.

Auch die Kantenfestigkeit der erzeugten Trennkanten ist von hoher Qualität. Diese wurde mittels 4-Punkt-Biegeversuch ermittelt. Es konnte ein Durchschnittswert der Festigkeit von wenigstens 120 MPa bei vorgespanntem Glas erreicht werden.

Die Laserquelle wird entsprechend des Wellenlängenbereiches, in dem das Substrat eine Transparenz aufweist, ausgewählt. Der Wellenlängenbereich der emittierten Strahlung fällt in den Transparenzbereich des Substrates.

Der Laserstrahl kann räumlich mit einer gaußsche Intensitätsverteilung fokussiert werden, um eine ausreichend hohe Intensität zu erreichen. Dabei liegt der erste Fokuspunkt innerhalb des Substrates, also im Substratvolumen. Trifft der Laserimpuls auf diesen Punkt im Volumen des Substrates, so kann es dort zu einer Plasmabildung und damit zu einer Materialmodifikation kommen. Aufgrund der nunmehr folgenden Defokussier- und weiteren Fokussiereffekten kann die filamentartige Perforation, umfassend mehrere Fokussierungspunkte, in dem Substratvolumen erzeugt werden.

Die Fokussierungspunkte in beispielsweise transparentem Glas weisen häufig eine kugelförmige, annähernd symmetrische Form auf. Mittels Spezialoptiken konnten aber in vorgespanntem Glas Fokussierungspunkte erzeugt werden, welche eine nicht kugelförmige räumliche Ausbildung aufweisen. So konnten beispielsweise Fokussierungspunkte mit elliptischen, lanzettenförmigen oder tropfenförmigen Formen erzeugt werden. Derartige Strukturen der Fokussierungspunkte erleichtern die Rissbildung, insbesondere durch einen besseren Rissverlauf von einem Fokussierungspunkt zum nächsten, wodurch auch eine bessere Qualität der Trennkante erreicht werden kann.

Eine geeignete Laserquelle gemäß der vorliegenden Erfindung arbeitet mit einer Repetitionsrate, welche zwischen 10 kHz und 120 kHz, bevorzugt zwischen 30 kHz und 110 kHz und ganz besonders bevorzugt zwischen 35 kHz und 105 kHz liegt.

Dabei liegt die geeignete Pulsdauer eines Laserimpulses in einem Bereich von weniger als 100 Pikosekunden, bevorzugt bei weniger als 10 Pikosekunden und ganz besonders bevorzugt bei weniger als 1 Pikosekunde. Die Leistung der Laserquelle liegt dabei besonders günstig in einem Bereich von etwa 7 bis 12 Watt.

Mittels einer derartigen Laserstrahlung konnten sehr gute Ergebnisse erzielt werden für das Erzeugen von in der Tiefe perforierten Trennlinien auf vorgespanntem Glas.

Eine Erhöhung der Laserleistung kann, insbesondere bei vorgespannten Glas, zu einer stärkeren Neigung zu spontaner Rissbildung führen, wohingegen bei nicht vorgespannten Glas eine dichtere Perforation erreicht werden kann, welche wiederum die Trennbarkeit verbessert.

Die Erfindung betrifft weiterhin eine Vorrichtung zum Trennen eines Substrates, insbesondere von vorgespanntem Glas oder Glaskeramik, mittels fokussierter Laserbestrahlung, siehe Anspruch 12. In einer Weiterbildung des Verfahrens zum Trennen eines Substrates, insbesondere von vorgespanntem Glas oder Glaskeramik, mittels fokussierter Laserbestrahlung, wird nach erfolgter Perforation des Substrates entlang der späteren Trennstelle das Substrat einer zweiten Atmosphäre ausgesetzt. Diese zweite Atmosphäre unterscheidet sich von der Schutzgasatmosphäre, die demnach die erste Atmosphäre darstellt, in ihrem Gehalt an OH-Ionen. So ist der Gehalt an OH-Ionen der zweiten Atmosphäre höher als der der ersten Atmosphäre.

Die Erfinder haben herausgefunden, dass ein erhöhter Anteil an OH-Ionen ein Trennen bzw. Brechen des Werkstückes entlang der perforierten Trennlinie begünstigen kann. Durch das Beaufschlagen mit einer mit OH-Ionen angereicherten Atmosphäre, beispielsweise Nassdampf, kann demnach die Rissbildung unterstützt und somit gesteuert werden. Auf diese Weise kann auch der Prozessschritt des Brechens zum Erzeugen der Materialtrennung gezielt beeinflusst werden, so dass eine einfache industrielle Anwendbarkeit gegeben ist. Insbesondere kann das Auftreten von spontanen Bruch-Rissen verhindert werden.

Besonders gute Erfahrungen wurden gemacht mit einer zweiten Atmosphäre, welche einen OH-Ionen-Gehalt von wenigstens 1,4 Vol%, bevorzugt wenigstens 2 Vol% aufweist.

Besonders günstig kann daher auch der Raum zur Aufnahme des Substrates gasdicht ausgebildet sein, so dass auf einfache Weise eine erste, OH-ionenarme Atmosphäre eingestellt werden kann. Weiterhin kann besonders vorteilhaft dieser Raum auch zur Beaufschlagung des Substrates mit einer OH-Ionen angereicherten Atmosphäre ausgebildet sein. Ebenso kann die Vorrichtung aber auch zwei getrennte Räume umfassen, welche entsprechend für die Beaufschlagung mit der ersten oder der zweiten Atmosphäre ausgebildet sind. Weitere Einzelheiten der Erfindung ergeben sich aus der Beschreibung der dargestellten Ausführungsbeispiele und den angefügten Ansprüchen.

Ausführungsbeispiele der Erfindung werden anhand der Zeichnungen beschrieben. Dabei zeigt:
- Fig. 1:: Eine Laserbearbeitungsvorrichtung während der Bearbeitung eines Werkstücks auf einem Werkstücktisch,
- Fig. 2:: eine vergrößerte Einzelheit aus Fig. 1,
- Fig. 3:: ein elliptischer Strahlungsquerschnitt der Laserbearbeitungsvorrichtung,
- Fig. 4:: lanzettförmige Strahlungsquerschnitte und
- Fig. 5:: tropfenförmige Strahlungsquerschnitte.

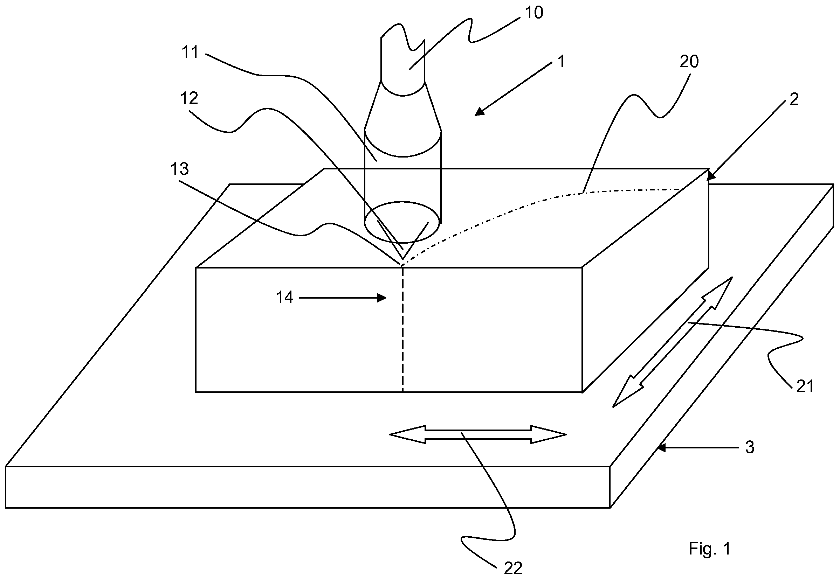

Fig. 1 zeigt eine Laserbearbeitungsvorrichtung 1 über einem Werkstück 2, das auf einem Werkstücktisch 3 aufruht. Die Laserbearbeitungsvorrichtung weist einen Ultrakurzlaser 10 und eine Fokussieroptik 11 auf, um ein fokussiertes Strahlenbündel 12 abzugeben, dessen Fokuspunkt 13 in etwa auf der Oberseite des Werkstückes 2 gelegen ist. Auf dem Werkstück 2 ist eine Schnittlinie oder Bruchlinie 20 angedeutet, entlang welcher das Werkstück aufgetrennt oder gespalten werden soll. Es ist vorgesehen, dass der Fokus 13 entlang dieser Linie 20 gefahren werden kann, was durch Verstellung des Tisches in den beiden Koordinatenrichtungen 21, 22 zu bewerkstelligen ist. Es werden sehr kleine Verstellschritte benutzt.

Der Ultrakurzlaser 10 ist in der Lage, Laserpulse in zwei oder mehreren aufeinanderfolgenden Perioden abzugeben. Die Wellenlänge der Strahlung ist so gewählt, dass sie in einem Transparenzbereich des Werkstücks 2 liegt. Die Energie der Laserpulse ist so bemessen, dass sich jeweils eine linienförmige Schädigungsstelle 14 quer zu der Oberfläche des Werkstücks 2 bildet. Indem die Fokussieroptik 11 entlang der vorgesehene Bruchlinie 20 verfahren wird, werden in dem Werkstück 2 eine Reihe von Schädigungsstellen 14 erzeugt, die gewissermaßen die vorgesehene Bruchfläche vorschreiben. Die Erfindung hat mit der Herstellung dieser linienförmig aufgereihten Schädigungsstellen 14 zu tun.

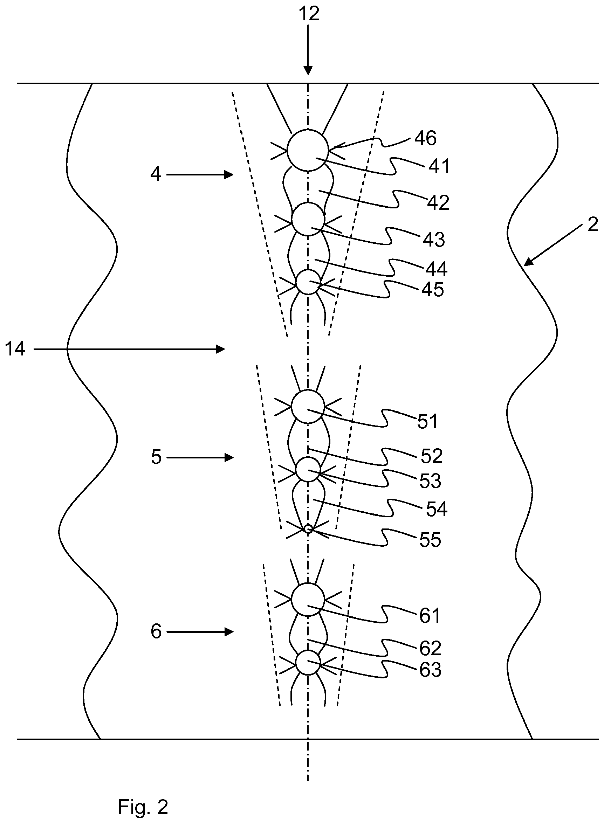

Fig. 2 zeigt schematisch eine sich quer durch das Werkstück 2 hindurch ziehende Schädigungsstelle 14. Im dargestellten Ausführungsbeispiel umfasst die Schädigungsstelle 14 drei in einer Linie ausgerichtete Filamentstrukturen 4, 5 und 6. Jeder dieser Filamentstrukturen wird durch einen ultrakurzen Laserpuls erzeugt. Im Falle der Filamentstruktur 4 führt dies durch Selbstfokussierung des Laserstrahlenbündels 12 zu einer Plasmastelle 41, an welcher das Werkstückmaterial in die Plasmaphase übergeht, was von ausgehender Strahlung 42 begleitet ist, die durch Selbstfokussierung zu einer weiteren Plasmastelle 43 führt und sich der Vorgang so lange fortsetzt, bis die Energie des Laserpulses erschöpft ist. An den Plasmabildungsstellen 41, 43, 45 findet durch Wäremausdehnung gewissermaßen eine Plasmaexplosion statt, die zur Rissbildung hauptsächlich entlang eines sich bildenden Spaltes ins Innere des Werkstücks führt, was erwünscht ist, jedoch auch quer zu diesem Kanal, wie durch Risse 46 angedeutet. Diese Querrisse 46 sind unerwünscht und sollen bei der Erfindung möglichst klein gehalten werden.

Zu diesem Zweck wird die Schädigungsstelle 14 in mehreren Etappen hergestellt. Man erreicht dies dadurch, dass die Laserpulse in zwei oder mehreren aufeinanderfolgenden Perioden abgegeben werden. Die Energie der Laserpulse während einer Periode wird dabei so klein gewählt, dass nur kleine und wenige Plasmaexplosionsstellen während einer Abgabeperiode entstehen. Dadurch wird die Bildung von schädlichen seitlichen Rissen 46 stark vermindert. Entlang der Filamentstruktur 4 bilden sich Spalten und Spaltrisse aus, die den späteren Bruch im Werkstück vorzeichnen.

In einer zweiten Laserpulsperiode wird die Filamentstruktur 5 in ähnlicher Weise erzeugt wie die Filamentstruktur 4. Es bilden sich Plasmabläschen 51, 53, 55 und Defokussier-Fokussierstellen 52, 54; ähnlich Plasmabläschen 61, 63 und Defokussier-Fokussierstellen 62 bei der dritten Laserpulsperiode. Der größere Tiefenansatz gelingt aufgrund der sich zuvor gebildeten Spalte und Spaltrisse in Richtung der Schädigungsstelle, die gewissermaßen einen Führungskanal für die zweite und die darauffolgenden Laserpulsperioden darbietet. Die Anzahl der aufeinanderfolgenden Laserpulsperioden bemisst sich nach der Dicke des Werkstücks 2.

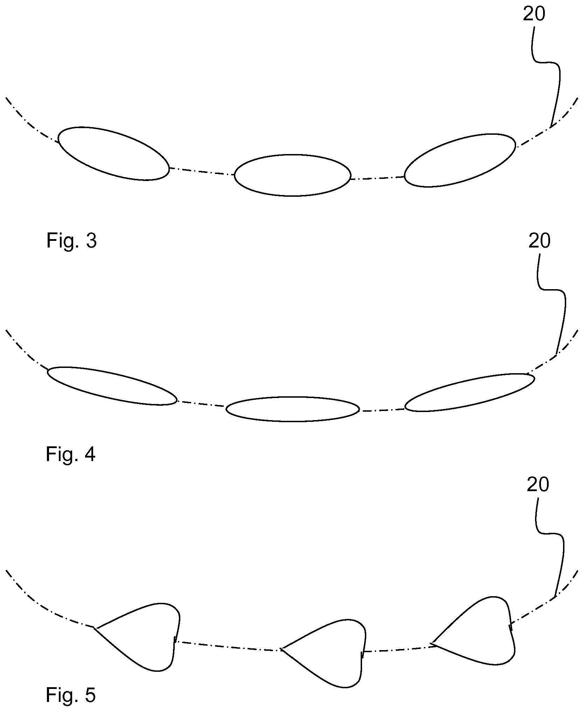

Zur Begünstigung der Spaltenbildung in Richtung der Bruchfläche 20 ist es zweckmäßig, wenn man Querschnittsformen des Laserstrahlbündels wählt, die eine Ausdehnung in Richtung des erwünschten Bruches aufweisen. Solche Querschnittsformen sind in den Fig. 3, 4 und 5 skizziert. Die elliptische Querschnittsform lässt sich durch kombinierte Zylinderlinsen aus einer ursprünglich kreisförmigen Querschnittsform des Laserstrahls gewinnen. Die Lanzettenform der Fig. 4 und die Tropfenform der Fig. 5 des Strahlquerschnittes lassen sich durch spezielle Linsen gewinnen. Bei diesen Formen werden Spaltrisse und Spalte in Richtung der gewünschten Bruchlinie 20 begünstigt.

Wenn, wie dargestellt, die Bruchlinie Kurvenform aufweisen soll, müssen die Laserstrahlenbündel so nachgeführt werden, dass die größere Querschnittsausdehnung in die gewünschte Bruchrichtung weist.

Bei der Bearbeitung von spröden Werkstoffen besteht die Gefahr, dass es zu einem spontanen Brechen des Werkstücks kommt, während noch nicht alle Schädigungsstellen längs der vorgesehenen Bruchlinie 20 vollendet sind. Um diese Gefahr herabzusetzen oder ganz zu vermeiden, wird die Bearbeitung erfindungsgemäss in "neutraler" Atmosphäre ausgeführt, beispielsweise in Stickstoff. Es werden so präparierte Werkstücke erhalten, die zur Trennung oder Spaltung vorbereitet sind. Die endgültige Trennung oder Spaltung erfolgt dann mittels angelegter mechanischer Spannung an das Werkstück und unter Wasserdampf oder einer anderen Hydroxylgruppe OH enthaltenden Atmosphäre.

Es wird darauf hingewiesen, dass die Abstände der linienförmig aufgereihten Schädigungsstellen 14 umso enger gewählt werden, je feiner man das Bruchbild in der Auftrennungsebene wünscht. Die Abstände liegen in der gleichen Größenordnung wie die Durchmesser der Schädigungsstellen.

## Patentansprüche

1. Verfahren zur Herstellung von linienförmig aufgereihten Schädigungsstellen (14) in einem transparenten Werkstück (2), mit folgenden Schritten:
a) Bereitstellen einer Laserbearbeitungsvorrichtung (1) mit Ultrakurzlaser (10) und Fokussieroptik (11), wobei die Wellenlänge der Laserstrahlung im Transparenzbereich des Werkstücks (2) liegt; **gekennzeichnet durch** folgende Schritte:
Nutzen eines gasdichten Raums zur Halterung des Substrates;
Halterung des Werkstückes in dem gasdichten Raum;
b) Bereitstellen eines Werkstücktisches (3) und einer Verschiebeeinrichtung zur Positionierung der Fokussieroptik (11) auf das Werkstück (2) während der Herstellung einer Schädigungsstelle (14) im Werkstück (2) und danach zur schrittweisen Relativverschiebung zwischen Fokussieroptik (11) und Werkstücktisch (3) gemäß der Linie (20) der Reihe der Schädigungsstellen (14);
c) Abgabe von Laserpulsen in zwei oder mehreren aufeinander folgenden Perioden während der Positionierung der Fokussieroptik (11) an jeder Schädigungsstelle (14), wobei die Energie der Laserpulse während jeder Periode zur Bildung einer zugehörigen Filamentstruktur (4, 5, 6) in dem transparenten Werkstück (2) bemessen ist und die aufeinander folgenden Laserpulsperioden quer durch das Werkstück (2) sich erstreckende, hintereinander aufgereihte Filamentstrukturen (4, 5, 6) ergeben, wobei die Abgabe der Laserpulse in dem gasdichten Raum bei Schutzgasatmosphäre erfolgt.

2. Verfahren nach Anspruch 1,
wobei jede Filamentstruktur mehrere fokussierende und defokussierende Stellen aufweist, die perlenschnurartig sich quer zu dem plattenförmigen Werkstück erstrecken.

3. Verfahren nach Anspruch 1 oder 2,
wobei die Schritte der Relativverschiebung von Fokussieroptik (11) zu Werkstück (2) im Größenbereich der seitlichen Abmessung der Filamentstrukturen (4, 5, 6) längs der linienförmig aufgereihten Schädigungsstellen liegen.

4. Verfahren nach einem der Ansprüche 1 bis 3,
wobei die Anzahl der aufeinander folgenden Laserpulsperioden an einer Schädigungsstelle (14) gemäß der örtlichen Dicke des Werkstücks bemessen wird.

5. Verfahren nach einem der Ansprüche 1 bis 4,
wobei die Fokussieroptik (11) ein Strahlenbündel (12) mit einem solchen Querschnitt erzeugt, der in Richtung der linienförmig aufgereihten Schädigungsstellen ausgedehnter ist als quer zu dieser Richtung.

6. Verfahren nach Anspruch 5,
wobei die Fokussieroptik (11) hinsichtlich der größeren Strahlenbündel-Querschnittsausdehnung verstellbar ist und die Richtung der größeren Querschnittsausdehnung auf den Verlauf der linienförmig aufgereihten Schädigungsstellen nachgeführt wird.

7. Verfahren nach einem der Ansprüche 1 bis 6,
wobei das Werkstück (2) während der Herstellung der Linienförmig aufgereihten Schädigungsstellen in einer neutralen Atmosphäre gehalten wird, um den vorzeitigen Bruch längs der linienförmig aufgereihten Schädigungsstellen zu vermeiden.

8. Verfahren zum Trennen und Spalten von Werkstücken, bei welchem das Verfahren zur Herstellung von linienförmig aufgereihten Schädigungsstellen nach einem der Ansprüche 1 bis 6 als Vorbereitungsschritt vorgeschaltet wird.

9. Verfahren nach Anspruch 8,
wobei zur Begünstigung der Trennung oder Spaltung des Werkstücks (2) den Schädigungsstellen (14) Gas mit OH-Ionen-Anteilen zugeführt wird.

10. Verfahren zum Trennen eines Werkstücks (2) mittels fokussierter Laserbestrahlung, **gekennzeichnet durch** die folgenden Schritte:
- das Werkstück (2) wird mit einer ersten Schutzgasatmosphäre beaufschlagt,
- gepulste, ultrakurze Laserstrahlung wird auf das Werkstück (2) gerichtet, wobei das Werkstück (2) in dem Wellenlängenbereich der Laserbestrahlung transparent ist,
- durch die Laserbestrahlung wird eine in die Tiefe gehende, filamentartige Materialsmodifikation (4, 5, 6) in einem vorbestimmten Volumen des Werkstücks erzeugt,
- das Werkstück (2) wird nach der Laserbestrahlung mit einer zweiten, eine höheren OH-Ionen-Anteil aufweisenden Atmosphäre als die Schutzgasatmosphäre beaufschlagt,
- Brechen des Werkstückes (2) entlang des durch die Materialmodifikation (4, 5, 6) festgelegten Trennbereiches.

11. Verfahren zum Trennen eines Werkstücks (2) nach Anspruch 10,
wobei das Werkstück (2) vorgespanntes Glas oder Glaskeramik umfasst.

12. Vorrichtung zum Trennen eines Werkstücks (2), insbesondere von vorgespanntem Glas oder Glaskeramik, mittels fokussierter Laserbestrahlung, umfassend:
- eine gepulste Ultrakurz-Laserlichtquelle, um durch die Laserbestrahlung eine in die Tiefe gehende, filamentartige Materialmodifikation (4, 5, 6) in einem vorbestimmten Volumen des Werkstücks (2) zu erzeugen,
- eine Vorrichtung zum Bewegen des Werkstückes (2) und/oder der Laserlichtquelle relativ zueinander,
und
- eine Trennungsvorrichtung zur Trennung des Werkstücks (2) entlang der durch die Materialmodifikation (4, 5, 6) festgelegten Trennlinie (20), **gekennzeichnet durch** folgende Merkmale:
- einen gasdichten Werkstück-Raum zur Aufnahme des Werkstückes, so dass das Werkstück (2) mit einer Schutzgasatmosphäre beaufschlagt sein kann
- Zuführung in den Werkstück-Raum
- eine Nassdampfzuführung in den Werkstück-Raum.

## Claims

1. A method for generating a series of damage formations (14) in a transparent workpiece (2) along a line, comprising the steps of:
a) providing a laser processing device (1) including an ultra-short pulsed laser (10) and focusing optics (11), with the wavelength of the laser radiation being within the transmission range of the workpiece (2);
**characterised by** the steps of:
using a gas-tight chamber for supporting the substrate;
supporting the workpiece in the gas-tight chamber;
b) providing a workpiece table (3) and a displacement means for positioning the focusing optics (11) above the workpiece (2) during the generation of a damage formation (14) in the workpiece (2) and thereafter for incrementally displacing the focusing optics (11) and the workpiece table (3) relative to each other according to the line (20) of the series of damage formations (14);
c) emitting, while the focusing optics (11) is positioned at each respective location of damage formation (14), laser pulses in two or more successive periods, wherein the energy of the laser pulses during each period is dimensioned so that a corresponding filament formation (4, 5, 6) is produced in the transparent workpiece (2), and wherein the successive laser pulse periods produce consecutively aligned filament formations (4, 5, 6) extending transversely through the workpiece (2); wherein the emitting of the laser pulses is performed in the gas-tight chamber under protective gas atmosphere.

2. The method according to claim 1,
wherein each filament formation comprises a plurality of focusing and defocusing points aligned transversely to the plate-shaped workpiece like a string of pearls.

3. The method according to claim 1 or 2,
wherein the increments of displacement of the focusing optics (11) relative to the workpiece (2) are in the order of magnitude of the lateral dimension of the filament formations (4, 5, 6) along the series of damage formations along the line.

4. The method according to any one of claims 1 to 3,
wherein the number of successive laser pulse periods at each location of damage formation (14) is chosen as a function of the local thickness of the workpiece.

5. The method according to any one of claims 1 to 4,
wherein the focusing optics (11) generates a radiation beam (12) having a cross-sectional shape with a larger dimension in a direction along the line of the series of damage formations than transversely to said direction.

6. The method according to claim 5,
wherein the focusing optics (11) is adjustable with respect to the larger cross-sectional dimension of the radiation beam, and wherein the alignment of the larger cross-sectional dimension is adjusted so as to follow the line of the series of damage formations.

7. The method according to any one of claims 1 to 6,
wherein during the generation of the series of damage formations along a line the workpiece (2) is exposed to a neutral atmosphere in order to prevent premature fracture along the line of the series of damage formations.

8. A method for separating and cleaving workpieces, in which the method for generating a series of damage formations along a line according to any one of claims 1 to 6 is performed as a preparatory step.

9. The method according to claim 8, wherein the damage formations (14) are exposed to a gas including a content of OH ions in order to promote the separating and cleaving of the workpiece (2).

10. A method for separating a workpiece (2) by means of focused laser radiation, **characterised by** the steps of:
- exposing the workpiece (2) to a first protective gas atmosphere;
- directing ultra-short pulsed laser radiation onto the workpiece (2), the workpiece being transparent in the range of wavelengths of the laser radiation;
- generating a filamentary material modification (4, 5, 6) in depth in a predetermined volume of the workpiece by the laser irradiation;
- after the laser irradiation, exposing the workpiece (2) to a second atmosphere with a content of OH ions that is higher than that of the protective gas atmosphere;
- breaking the workpiece (2) along the separation area defined by the material modification (4, 5, 6).

11. The method for separating a workpiece (2) according to claim 10, wherein the workpiece (2) comprises toughened glass or glass ceramics.

12. An apparatus for separating a workpiece (2), in particular toughened glass or glass ceramics, by focused laser irradiation, comprising:
- an ultra-short pulsed laser light source for generating a filamentary material modification (4, 5, 6) in depth in a predetermined volume of the workpiece (2) by the laser irradiation;
- means for moving the workpiece (2) and/or the laser light source relative to each another;
- separating means for separating the workpiece (2) along the separation line (20) defined by the material modification (4, 5, 6);
**characterised by** the following features:
- a gas-tight workpiece chamber for accommodating the workpiece, so that the workpiece (2) can be exposed to a protective gas atmosphere;
- feeding means into the workpiece chamber;
- wet steam feeding means into the workpiece chamber.

## Revendications

1. Procédé de production de points de rupture (14) alignés sur une pièce transparente (2), comprenant les étapes suivantes :
a) préparation d'un dispositif d'usinage par laser (1) comportant un laser ultra-court (10) et une optique de focalisation (11), la longueur d'onde du rayonnement laser étant située dans la plage de transparence de la pièce (2) ; **caractérisé par** les étapes suivantes :
utilisation d'un espace étanche aux gaz pour le support du substrat ;
support de la pièce dans l'espace étanche aux gaz ;
b) préparation d'une table (3) pour pièce et d'un dispositif de déplacement pour le positionnement de l'optique de focalisation (11) sur la pièce (2) pendant la réalisation d'un point de rupture (14) sur la pièce (2), et pour le déplacement relatif progressif consécutif entre l'optique de focalisation (11) et la table (3) pour pièce suivant la ligne (20) formée par la succession des points de rupture (14) ;
c) émission d'impulsions laser en deux ou plus de deux périodes successives pendant le positionnement de l'optique de focalisation (11) sur chaque point de rupture (14), l'énergie des impulsions laser étant ajustée pendant chaque période pour que soit formée une structure filamentaire (4, 5, 6) correspondante dans la pièce transparente (2) et les périodes d'impulsions laser successives produisant des structures filamentaires (4, 5, 6) alignées s'étendant transversalement dans la pièce (2), les impulsions laser étant émises sous atmosphère protectrice dans l'espace étanche aux gaz.

2. Procédé selon la revendication 1, dans lequel chaque structure filamentaire présente plusieurs points focalisants et défocalisants qui s'étendent en cordon de perles transversalement à la pièce en forme de plaque.

3. Procédé selon la revendication 1 ou 2, dans lequel les pas de déplacement relatif de l'optique de focalisation (11) par rapport à la pièce (2) sont de l'ordre de grandeur de la dimension latérale des structures filamentaires (4, 5, 6) le long des points de rupture alignés.

4. Procédé selon l'une des revendications 1 à 3, dans lequel le nombre des périodes d'impulsions laser successives sur un point de rupture (14) est calculé en fonction de l'épaisseur locale de la pièce.

5. Procédé selon l'une des revendications 1 à 4, dans lequel l'optique de focalisation (11) génère un faisceau de rayonnement (12) ayant une section transversale plus étendue dans la direction des points de rupture alignés que transversalement à cette direction.

6. Procédé selon la revendication 5, dans lequel l'optique de focalisation (11) est réglable concernant l'extension supérieure de section transversale de faisceau, et la direction de l'extension supérieure de section transversale suit le tracé des points de rupture alignés.

7. Procédé selon l'une des revendications 1 à 6, dans lequel la pièce (2) est maintenue dans une atmosphère neutre pendant la production des points de rupture alignés, pour éviter une rupture précoce le long des points de rupture alignés.

8. Procédé de tronçonnage et de séparation de pièces, précédé du procédé de production de points de rupture alignés selon l'une des revendications 1 à 6 en tant qu'étape de préparation.

9. Procédé selon la revendication 8, dans lequel, pour faciliter le tronçonnage et la séparation de la pièce (2), du gaz à teneur en ions OH- est conduit vers les points de rupture (14).

10. Procédé de tronçonnage d'une pièce (2) au moyen d'un rayonnement laser focalisé, **caractérisé par** les étapes suivantes :
- la pièce (2) est soumise à une première atmosphère protectrice,
- un rayonnement laser ultra-court à impulsions est dirigé vers la pièce (2), la pièce (2) étant transparente dans la plage de longueur d'onde du rayonnement laser,
- l'irradiation laser provoque une modification filamentaire du matériau (4, 5, 6) en profondeur dans un volume défini de la pièce,
- après l'irradiation laser, la pièce (2) est soumise à une deuxième atmosphère présentant une teneur en ions OH-supérieure à celle de l'atmosphère protectrice,
- cassure de la pièce (2) le long de la zone de séparation définie par la modification du matériau (4, 5, 6).

11. Procédé de tronçonnage d'une pièce (2) selon la revendication 10, dans lequel la pièce (2) comprend du verre précontraint ou de la vitrocéramique.

12. Dispositif pour le tronçonnage d'une pièce (2), en particulier en verre précontraint ou en vitrocéramique au moyen d'un rayonnement laser focalisé, comprenant :
- une source de lumière laser à impulsions, destinée à provoquer par irradiation laser une modification filamentaire du matériau (4, 5, 6) en profondeur dans un volume défini de la pièce (2),
- un dispositif destiné à déplacer la pièce (2) et/ou la source de lumière laser l'une par rapport à l'autre, et
- un dispositif de tronçonnage destiné à tronçonner la pièce (2) le long de la ligne de séparation (20) définie par la modification du matériau (4, 5, 6), **caractérisé par** les caractéristiques suivantes :
- un espace pour pièce étanche aux gaz pour la réception de la pièce, permettant l'exposition de la pièce (2) à une atmosphère protectrice,
- une amenée vers l'espace pour pièce,
- un refoulement de vapeur humide dans l'espace pour pièce.
